# EUROPEAN PATENT APPLICATION

(11) **EP 4 757 299 A1**
(43) Date of publication of application: **10.06.2026**
(21) Application number: 25220691.7
(22) Date of filing: 04.12.2025
(51) Int. Cl.: H04M 3/38, H04M 3/42, H04M 7/00

(54) **METHOD AND SYSTEM FOR HANDLING MOBILE OR NOMADIC INCOMING OR OUTGOING CALLS OF A DEVICE, MADE WITH VOICE OVER IP, VOIP TECHNOLOGY**

(30) Priority: 06.12.2024 IT 202400027807
(71) Applicant: VIANOVA S.P.A., 55054 Massarosa (LU) (IT)
(72) Inventor: BELLUOMINI, Andrea, 55054 Massarosa (IT); PECCHIA, Emiliano, 55054 Massarosa (IT); LUCHI, Giorgio, 55054 Massarosa (IT); LUISOTTI, Stefano, 55054 Massarosa (IT); MUSTACCHIO, Fabio, 55054 Massarosa (IT); OPPEDISANO, Francesco, 55054 Massarosa (IT); LUCETTI, Stefano, 55054 Massarosa (IT)
(74) Representative: Savi, Massimiliano

(57) **Abstract**

A method for making calls by a user by means of company Voice over IP (VoIP) applications or fixed-mobile convergence solutions, when the user's geographical position is incompatible with the *Caller Line IDentifier* (CLID) that the user wishes to use. The method uses geolocation technologies for determining the user's position and compares it with other CLID information. If the user's position is incompatible with the CLID used, the method applies appropriate policies, thereby preventing improper use of the service and improving communication security and transparency.

## Description

### FIELD OF THE INVENTION

The field of the invention relates to VolP services supporting nomadic and fixed-mobile convergence telephone communications. So-called "nomadic" telephone communications are made statically from a fixed number referring to a location other than where the telephone call is made. An example of this type of communications is communications made in a remote working context, using the fixed office number. Whereas communications on the move are referred to as "mobile" communications and are generally made from a mobile terminal, such as a smartphone or tablet. Fixed-mobile convergence communications are carried out by means of a smartphone connected, for example, to a company telephone system by means of fixed and mobile networks.

In the context of nomadic communications, VolP systems allow users to connect to company telephone systems (PBX, UCC, etc.) from any Internet location, while not being physically at the company's premises, such as remote working, communicating from a PC or smartphone, using the company's landline telephone number, communicating among colleagues using company extension numbers, also in nomadic conditions, etc.

### BACKGROUND ART

FMC - Fixed-Mobile Convergence services allow users to connect to company telephone systems (PBX, UCC, etc.) and work remotely via mobile telephony. This means that it is possible to use all company's telephone system's services from one's mobile number (call forwarding, transfer, voicemail, company directory, etc.), to call colleagues on the company's extension number, and the like.

Voice over IP (VoIP) applications - which allow users to place calls using an internet connection, bypassing conventional telephone networks - and fixed-mobile convergence solutions have revolutionized the way people and companies communicate. However, the use of these technologies has also led to a series of problems related to the handling and security of information, in particular, with regard to the correct representation of the user's geographical position by means of the Caller Line Identifier (CLID), which, as known, is used in telephony to identify the telephone number of the user calling.

In fact, among the many possibilities enabled by the use of VolP in such contexts, the possibility of interchanging the CLID, among the various technologies, is one of the most popular with users because of the flexibility it grants to business processes, offering the possibility, for example, to call using one's own mobile phone while displaying the company landline number to the called party, or the possibility to answer a call intended for our mobile number from a software application installed on a PC. Or again, the possibility of answering cell calls exploiting a data connection (Wi-fi or mobile network).

This allows numerous advantages (besides those already mentioned) including:
1) the possibility for users to make or receive calls using their mobile number, also in conditions of poor signal, by exploiting a Wi-Fi connection in the vicinity;
2) the possibility of making and receiving mobile and fixed calls abroad at national rates;
3) a saving in termination costs for mobile virtual operators *(Mobile Virtual Network Operator -* MVNO) and consequently, more advantageous rates for end customers;
4) maximum audio quality by virtue of the possibility of using HD codecs;
5) the possibility of having all the value-added services on any number and also during nomadicity.

However, the aforesaid possibility of CLID interchange presents numerous problems relating to regulations and/or security/privacy.

A first problem regards the fact that the judicial authorities must have the possibility to analyze the telephone records (or intercept calls), with the certainty of being able to associate a particular telephone call with a particular user location.

Furthermore, when emergency numbers are used, the rescue district to be contacted is chosen based on the CLID. Therefore, if the user's physical location does not match the physical position thereof, a user making an emergency call during nomadicity might contact the police from the district of the company's headquarters rather than the district of the ongoing emergency.

Another problem regards the possibility of fraud, as it is possible, for example, to place and receive calls on a mobile number with the mobile terminal disconnected from the same mobile network. In this case, it would be impossible to establish where the terminal associated with a particular mobile SIM is located.

These issues result in the aforesaid technologies running into significant regulatory obstacles with respect to the full adoption thereof, and their use is often limited by the authorities.

The discrepancy between the user's geographical position and the CLID can create a series of significant problems that impact various aspects of communications and security. The main problems that can arise are listed and described below: Security problems.
- Risk of Fraud: users can use a falsified CLID to mask the true identity and position thereof, facilitating fraudulent activities, such as phishing and telephone scams. This represents a serious threat to the security of corporate and personal communications.
- Unauthorized Access: the calls made from a different location with respect to that declared by the CLID can allow unauthorized access to protected systems, violating security policies and compromising sensitive data.

### Regulatory and Legal Issues.

- Regulatory Compliance: many jurisdictions require telephone communications to accurately reflect the user's geographical location for reasons of regulatory compliance and in the event of an emergency. Discrepancies between the location and CLID can therefore result in violations of laws and regulations.
- Legal Liability: in the event of accidents or illegal activities, it can be difficult to trace the real user if the CLID does not match the user's geographical position. This may complicate legal investigations and the determination of liability.

### Issues of Reliability and Credibility.

- Loss of Trust: companies using CLIDs that do not match the users' actual position can lose the trust of customers and partners. Transparency is crucial for maintaining sound relationships built on trust.
- Service disruptions: in the event of emergencies, the use of a CLID, which does not reflect the user's true position, can lead to delays in rescue or inadequate responses by the emergency services.

### Problems of Handling Communications.

- Contact Confusion: when the CLID does not match the user's actual position, the recipients of the calls can be confused and distrustful, reducing the effectiveness of the communication.
- Tracking Difficulties: for companies, keeping track of communications and analyzing call data can become complex if the CLIDs do not accurately reflect the users' position.

### Financial Impact.

- Additional Costs: the need to implement corrective measures or to address legal and security issues arising from discrepancies between location and CLID can involve additional costs for companies.
- Reputational Damage: discrepancies between the geographical position and CLID can damage a company's reputation, with a negative impact on business relations and customer loyalty.

The current solutions for handling discrepancies between the geolocation and CLID are often incomplete or ineffective. Some of the techniques adopted include running manual checks for verifying the user's position (a technique subject to human error, which is not scalable); implementation of ad hoc company policies that may require users to use particular and appropriate telephone numbers (a technique depending on the implementation, or enforcement of these policies, which can be complex and difficult to monitor); implementation of the so-called geofencing techniques, adapted to define an area in an environment of virtual telephony corresponding to a real geographical area, so as to limit the use of VolP applications in certain areas (a technique that is not always effective in ensuring that the CLID matches the user's actual position). At other times, authorities find themselves forced to prohibit the use of these services due to the insufficient guarantee of authenticity and transparency of the information produced by the solutions available.

In view of the inadequacy of the current solutions, there is a clear need for an innovative system, which can verify real-time geolocation in order to accurately determine the user's position; automatically comparing the user's geographical position with the selected CLID; blocking the calls made when the user's position is incompatible with the CLID, while simultaneously ensuring the authenticity of the location information produced, thus enabling the definition of policies suitable for country's regulations, consequently ensuring compliance with existing regulations and improving communication security. It is the object to provide the authorities with a solution to avoid having to prohibit the use of these services, which are so important for digital transition.

The object of the present description aims at meeting these needs and solve the described problems, by offering a robust and automated solution, which is more secure, compliant and reliable for VolP communications and fixed-mobile convergence, by implementing a mechanism, which, based on company or regulatory policies, allows regulating the possibility for users to make calls when the geolocation thereof is incompatible with the desired CLID, and defining policies for nomadic CLID handling, according to the needs, to optimally manage discrepancies between the location and CLID in VolP communications and fixed-mobile convergence.

### SUMMARY OF THE INVENTION

The object of the present description relates to a system and a method for handling calls made by a user via *Voice over IP* (VoIP), or fixed-mobile convergence technologies, so as to verify the user's geographical position with respect to the CLID desired to be used by the user. The system uses geolocation technologies for determining the user's position and compares it with other CLID information. If user's position is incompatible with the CLID used, the system applies appropriate policies or regulations, thereby preventing improper use of the service, improving communication security and transparency.

The described invention implements a method, using real-time geolocation, for determining the user's geographical position. When the user attempts to make a call, the system compares the user's current position with the geographical prefix of the selected CLID. If the position does not match the region associated with the CLID, the call is blocked. This process is carried out automatically and transparently for the user who can receive information on the blocking of the call made, ensuring that all calls comply with the company's policies and regulations, as well as with existing regulations.

Advantageously, the system according to the invention can be integrated with VolP applications and fixed-mobile convergence solutions, which are already in use, thus facilitating the adoption thereof.

The present invention is therefore directed to a method for handling mobile or nomadic incoming, or outgoing calls of a device, made by means of VolP technology, where said device is a mobile communication device, and associated with at least a first CLID (*Calling Line IDentifier*) relating to a fixed network prefix that exploits a data network, and/or is associated with at least a second mobile CLID by means of a mobile SIM card, inserted in said device, exploiting a mobile telephone network,
and in which, following the attempt by a user to make a call using said first or second CLID and/or upon receipt of a call on said first or second CLID, said method comprises the following verification steps:
a) verifying that geolocation function is active on said device;
b) verifying that geolocation data access permits are active on said device;
c) verifying that data relative to geolocation of said device have not been tampered with or falsified;
d) verifying that geolocation module has signal coverage.

According to an aspect of the method according to the present description, the verification steps also comprise a further step c1), of verifying that the operating system of the device has not been tampered with or falsified.

Optionally, such further step can be carried out only at the first launch of the application, or on each launch of the application.

The embodiment, in which such further verification step c1) is carried out with each call, is only conceivable in contexts where such level of caution is required (due to existing regulations or other criticalities).

In the method according to the invention, if at least one of the verification steps a), b), c), d) or possibly c1) has a negative result, the incoming or outgoing call is blocked.

Whereas, if all the verification steps a), b) c), d) and possibly c1) have a positive result, said method comprises the following further steps:
e) determining the real- time geographical position of said device;
f) comparing the geographical position of the device detected in real time with a database, called *geofencing* database, containing information relating to predetermined geographical areas in which the first CLID and/or the second CLID are usable,

In which, if, following said comparison step f), the geographical position of said device is incompatible with the geographical areas stored in the geofencing database as compatible with said CLID used, the incoming or outgoing call is blocked or refused, or further verification steps are carried out.

Advantageously, by virtue of the method according to the present description, if the user's position is incompatible with the CLID used, the system applies appropriate intervention policies, thus preventing improper use of the service and improving the transparency and security of communications, as required by the existing local or international regulations, averting potential security risks.

According to another aspect of the object of the present description, if the call attempt is made to or from said second mobile CLID, and if said step d) of verifying that the geolocation module has signal coverage, gives a negative result, the verification steps comprise a further step:
d1) verifying the validity of original telephone cell information,
in which if said step d1) produces a negative result, the incoming or outgoing call is blocked,
and in which if said verification step d1) produces a positive result, the method proceeds with said steps e) and f).

Advantageously, this allows tracking the position of the device (in the event of using the mobile CLID) also in the absence of signal coverage for the geolocation device. According to an embodiment, at least step c) of verifying that the data relating to the geolocation of said device has not been falsified is carried out continuously, also during the call, preferably at predetermined and configurable time intervals.

Advantageously, the continuous control relating to the steps of verifying the accuracy of the data relating to geolocation, allows preventing a user from initiating the call from a compatible geographical position, and then, from subsequently using a spoofing system, during the call, on their mobile device, falsifying the data relating to the geographical position.

According to a further embodiment, all the verification steps a), b) c) and d) are carried out in a continuous manner, also during the call, preferably at predetermined and configurable time intervals.

According to another embodiment, the step of determining the real-time geographic position, e), and said step of comparing the detected geographic position with the geofencing database, f), are carried out in a continuous manner, also during the call, preferably at predetermined time intervals.

In particular, if, following the comparison step f), the geographical position of the device is incompatible with the geographical areas stored in the geofencing database as compatible with the CLID used, the call in progress is dropped.

Advantageously, the continuous control relating to the verification steps allows preventing a user from initiating the call from a compatible geographical position and subsequently moving, during the call, to an incompatible zone.

According to an aspect, the method further comprises a procedure of enabling said first and/or second mobile CLID on said device, to allow a user alternatively making and receiving calls, by means of said first or second CLID.

According to such aspect, the procedure of enabling said second CLID comprises the following steps:
A1) requesting the selection, by means of a graphical interface displayed on said device, of said first CLID and/or said second mobile CLID as enabled lines to make or receive calls by means of the device;
A2) verifying that the operating system of said device has not been tampered with or falsified,
A3) (optional) requesting geolocation data access permits for said device from the user;
in which, if the verification step A2) has a negative result and/or if, in response to step A3), if present, said geolocation data access permits are denied, said first and/or said second mobile CLIDs are not enabled to make or receive calls.

It should be noted that step A3) is optional in the enabling procedure, as it can also be carried out later, at the time of the call.

According to an aspect, following the selection by means of the graphical interface of the second mobile CLID as a user (line) enabled to make or receive calls by means of the device, the procedure of enabling said second CLID comprises an additional step:
A1.bis) verifying that said mobile SIM bearing said second mobile CLID is present on said device, configured to perform the method according to the invention.

If such verification step A1.bis) that said mobile SIM is on said device produces a negative result, said second mobile CLID is not enabled to make or receive calls, and the user will only be able to make calls using its first fixed enabled CLID.

Advantageously, this ensures that the mobile SIM is inserted in the physical device configured to carry out the method according to the invention, when the CLID desired to be used is mobile.

According to an embodiment, following completion of said procedure of enabling said first fixed CLID and/or second mobile CLID, a user can make calls alternatively by means of said first fixed CLID or by means of said second mobile CLID, selecting the choice through said user interface of said device.

According to another aspect, following completion of said enabling procedure of said second mobile CLID, said mobile SIM can be removed from said device, and a user can nevertheless continue to make and receive calls by said second CLID.

According to a further embodiment, if said mobile SIM is removed from the device and is inserted into a different mobile device, said second CLID is disabled by said device, and a user can no longer make calls by means of said second CLID.

Furthermore, the present invention is directed to a system for handling nomadic mobile incoming or outgoing calls of a device, made by means of VolP technology, according to the method described, where said system comprises:
a mobile device, associated with:
- at least a first CLID relating to a fixed geographical prefix, exploiting a data network, and associable with at least a second mobile CLID by means of a mobile SIM card, inserted in said device, exploiting a telephone network,
- at least a geolocation module for determining the real-time position of said device;
- at least a geofencing database containing information relating to predetermined geographical areas, in which the first CLID and/or second CLID are usable;
- a VolP server to receive as input call requests to or from said device and data relating to the real-time geographical position of the device and to the CLID in use;
- a Web Server that compares the geographical position of said device detected in real time with the data of said geofencing database, containing information relating to predetermined geographical areas, in which the first CLID and/or the second CLID are usable.

### BRIEF DESCRIPTION OF THE DRAWINGS

Further objects, features and advantages of the present invention will be more apparent from the following detailed description provided by way of non-limiting example and illustrated in the accompanying Figures, in which:
Figure 1 shows a block diagram of the system according to a preferred embodiment of the invention;
Figure 2 shows an example of a user interface of the communication device configured to implement the method according to a preferred embodiment of the invention;
Figure 3 shows a flow diagram of the authentication or login procedure of the second CLID in a preferred embodiment of the method according to the invention;
Figure 4 shows a flow diagram of the enabling procedure of the first CLID in a preferred embodiment of the method according to the invention;
Figure 5 shows a flow diagram of the enabling procedure of the second CLID in a preferred embodiment of the method according to the invention;
Figure 6 shows a flow diagram of the procedure for handling outgoing and incoming calls in an embodiment of the method according to the invention;

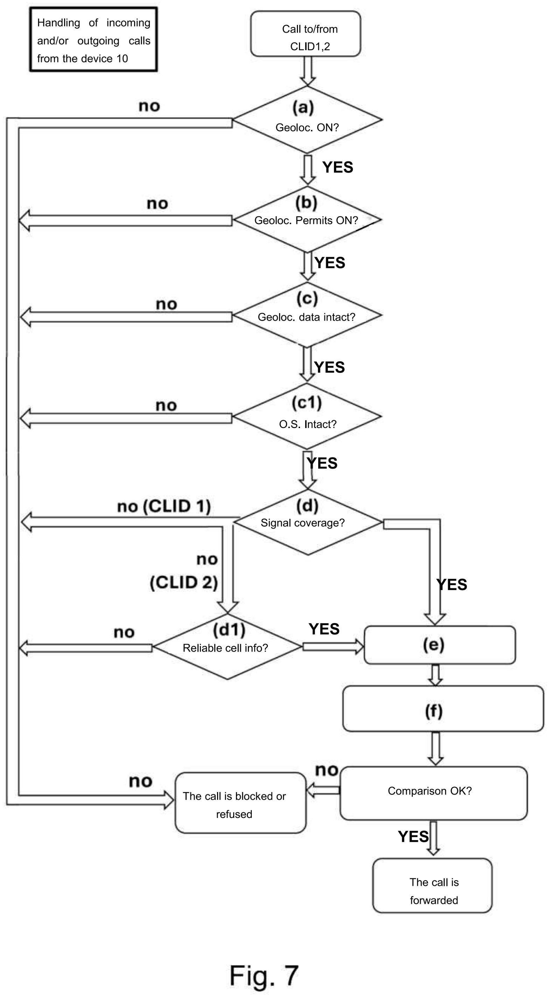

Figure 7 shows a flow diagram of the procedure for handling outgoing and incoming calls in an embodiment of the method according to the invention;
Figure 8 shows a flow diagram relating to the handling of outgoing calls from the communication device according to an embodiment of the method according to the invention;
Figure 9 shows a flow diagram relating to the handling of outgoing calls from the communication device according to another embodiment of the method according to the invention;
Figure 10 shows a flow diagram relating to the handling of incoming calls to the communication device according to an embodiment of the method according to the invention;
Figure 11 shows a flow diagram relating to the handling of incoming calls to the communication device according to another embodiment of the method according to the invention;
Figure 12 shows a flow diagram relating to the handling of outgoing and incoming calls, in an embodiment of the method according to the invention, when the user exits the permitted zones, and
Figure 13 shows a flow diagram relating to the handling of outgoing and incoming calls, in another embodiment of the method according to the invention, when the user exits the permitted zones.

The following description of exemplary embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

With reference to the accompanying Figures, the present invention is directed to a method for handling mobile or nomadic incoming or outgoing calls of a communication device 10, made by means of *Voice over IP* (VoIP) technology through a data network 11 and VolP server 12.

Nomadic use refers to the situation when the service is used (statically, i.e., without movement) from a different geographical position with respect to the street number to which a subscription belongs. A possible example of nomadic use is home working or co-working space activity, etc.

Whereas mobile calls refers to the situation when the service is used on the move, i.e., while the user is able to move on foot or by transportation.

As will be described in further detail below, in a possible embodiment, the method also allows handling calls made by means of fixed-mobile convergence (FMC) technologies.

Calls made by the device 10 can be directed to any public remote telephone terminal, e.g., a second terminal or device.

It should be noted that the term "VoIP technology" means technology that allows having a conversation, similar to the one that could be obtained with a telephone network, by exploiting a data network 11, such as an Internet connection or any other dedicated packet-switching telecommunication network that uses the IP protocol without a connection for data transport.

Furthermore, it should be noted that the terms "fixed - mobile convergence technologies", "FMC" or "convergent telephony" mean the integration of fixed and mobile communication services in a single solution, allowing users to utilize a single device or a single number for all communications.

Traditional fixed telephony refers to telephone lines that use the fixed telephone numbering plan for their operation. These systems have historically been limited to a specific physical position, such as a home or an office.

Whereas, convergent telephony, or FMC technology combines the advantages of fixed telephony with those of mobile telephony. Users can receive calls on both their landline number and mobile number, regardless of where they are, or which device they are using (PC, tablet, smartphone, desk phone, etc.). This is made possible, for example, through the aforesaid technologies, such as VoIP, which transmit voice calls by the Internet, and integrated network solutions, which handle both mobile and fixed services.

Therefore, the device 10 according to the invention is preferably a mobile device, associated with at least a first CLID 13 relating to a geographical prefix of a fixed network, which exploits a data network 11 (Wi-Fi or LTE, for example) for making or receiving calls.

Furthermore, the device 10 is associable with at least a second mobile CLID 14 by means of a mobile SIM card 21, which can be inserted in the device 10, and which exploits a telephone network to make or receive calls.

It should be noted that the presence of a SIM card 21 on the device 10 is not necessary to make or receive calls by means of the first CLID 13 relating to a fixed network number.

In the method according to the invention, in order to make or receive calls by means of the first CLID 13 relating to a geographical prefix of a fixed network it is sufficient to provide the appropriate access credentials (user and password) by the user interface 100 of the device 10, which is configured to carry out the method according to the invention, and the integrity of the data relating to geolocation and the operating system, as better specified in the following description, which will be referred to the possibility of making and receiving calls by a first fixed CLID 13 and/or a second mobile CLID 14, however, it should be considered as generalizable to a higher number of fixed and/or mobile CLIDs.

In an embodiment, the method comprises a two-factor user and device 10 authentication (login) procedure 300, to ensure security and provide an *application token,* which is subsequently used for enabling the selected CLID.

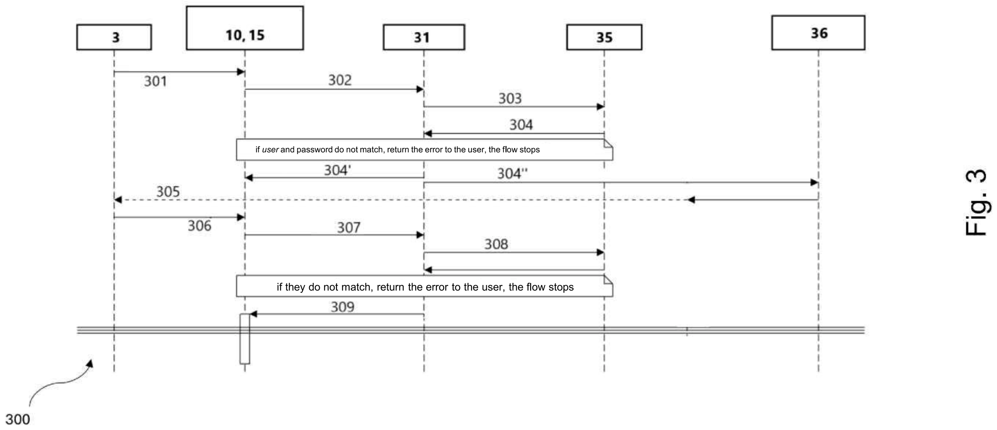

In particular, with reference to Figure 3, in a possible embodiment, the authentication procedure 300 comprises entering 301 user's credentials and password by means of the device's 10 interface 100 by a user 3, and sending 302 them to an OA&M Data Base 35 (operator's Operations Administration & Management database) for verifying the entered credentials.

If the operation of verifying 303 the user's credentials and password gives a negative result, the flow stops.

If the operation of verifying 303 the user's credentials and password gives a positive result, the authentication procedure goes on, and a unique *application token* is generated by the OA&M Data Base 35. This is sent 304 (together with the first and/or second CLID 13, 14) to the Web Server 31 and then it is sent 304' to the device 10 again.

At the same time, the Web Server 31 sends a request 304" to any messaging system 36 (SMS, e-mail, IM, etc.), to send the user 3 a text message containing an OTP code.

The user 3 receives 305 the text message containing the OTP via the messaging system 36 (SMS, e-mail, IM, etc.) and enters it 306 in the authentication interface 100 of the device 10.

At this point, the device 10 sends 307 to the operator's Web Server 31 the user's credentials, the CLID, the OTP and the *application token* for the subsequent operation of verification 308, by means of a comparison with the OA&M Data Base 35 provided by the operator.

If the verification operation 308 for the user's credentials, *application token* and OTP gives a negative result, the flow stops.

If the operation of verifying the user's credentials, *application token* and OTP gives a positive result, the authentication procedure is completed and the login is confirmed 309, possibly by means of a notification on the device 10.

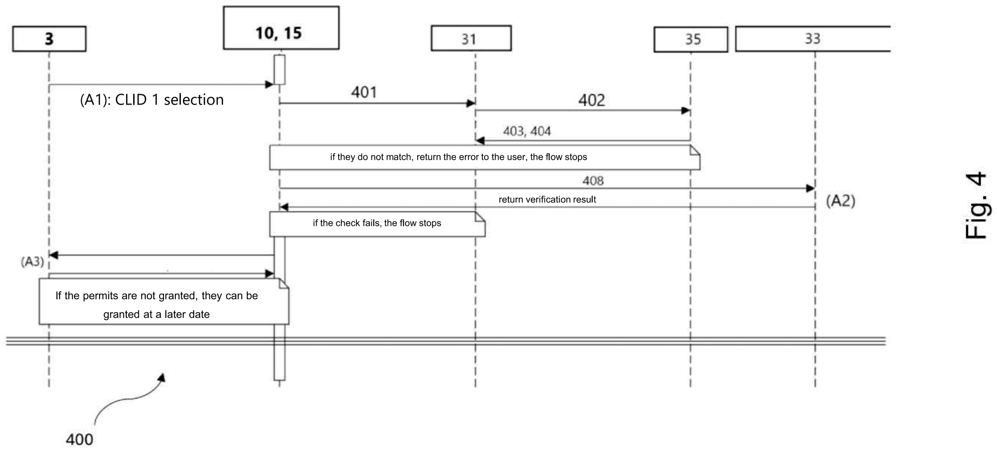

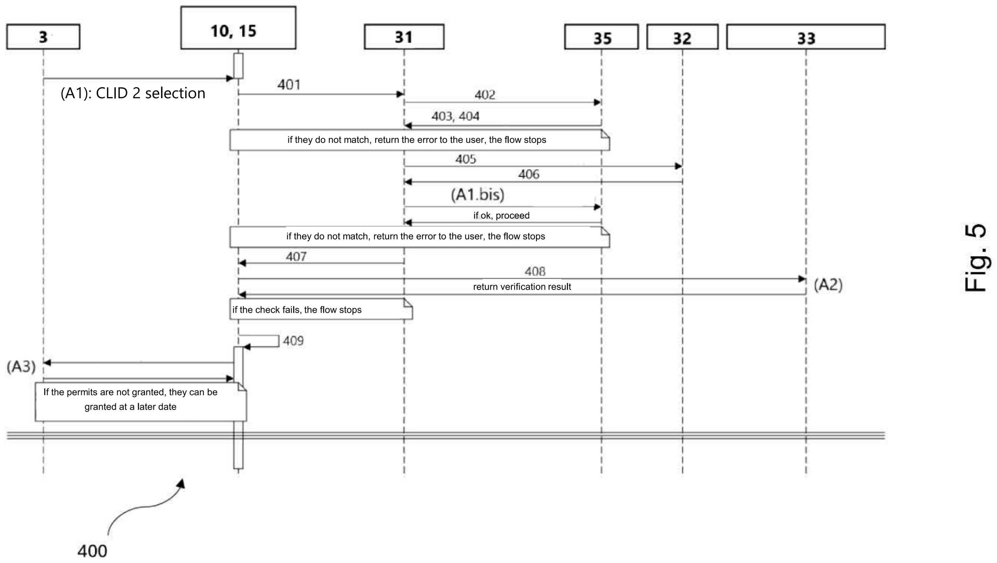

In a possible embodiment, following the authentication procedure described in the previous section, the method according to the invention comprises an enabling procedure 400, which will be described in this section, with reference to Figures 4 and 5, for enabling the first CLID 13 or the second CLID 14 or both the aforesaid CLIDs 13, 14 to make and receive calls.

In other words, in a preferred embodiment, the method comprises an enabling procedure 400 for enabling the first fixed CLID 13 and/or the second mobile CLID 14 on the device 10, to allow a user making and receiving calls by means of the second CLID 14, in addition, or as an alternative to the first CLID 13.

As anticipated above, the device 10 is associable with a first fixed CLID 13, which exploits a data network 11, and with at least a second mobile CLID 14 by means of a mobile SIM card 21 that can be inserted in the device 10 and that exploits a telephone network to make or receive calls.

When the device 10 is associated (in addition, or as an alternative to the first CLID 13) with at least a second mobile CLID 14, by inserting a mobile SIM card 21 in the device 10, which exploits a telephone network, the device 10 can be enabled to make or receive calls also by means of the second mobile CLID 14, in addition, or as an alternative to the first fixed CLID 13, which exploits a data network 11.

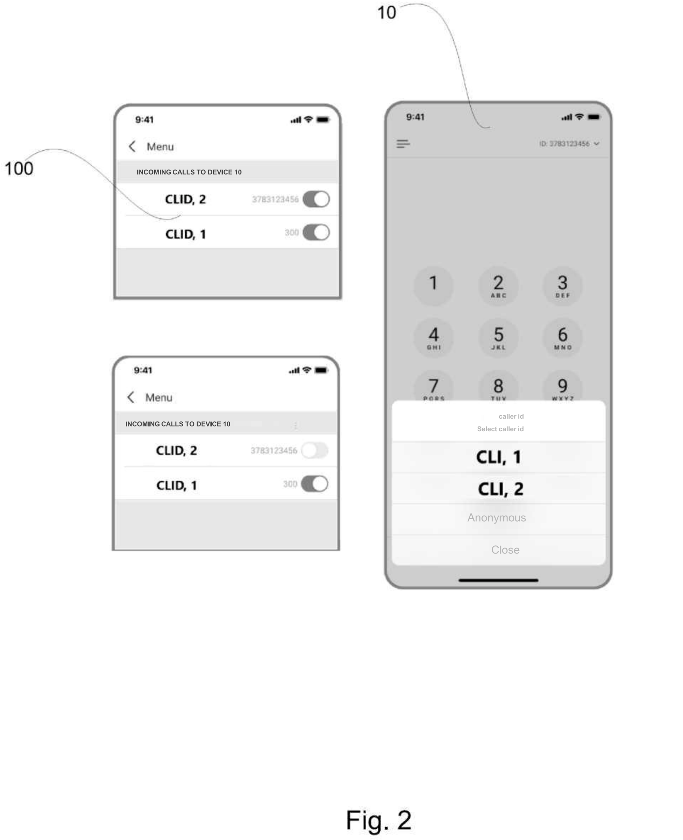

As will be better explained below, following the enabling of both CLIDs 13, 14, each time, and for each call, a user will be able to select the choice to make a call by the first CLID 13 or second CLID 14, by means of the user interface 100 of the device 10, shown in Figure 2.

In particular, with reference to Figures 4 and 5, in a possible embodiment, the enabling procedure of enabling the first CLID 13 and/or the second CLID 14 comprises the following steps:
A1) selecting, by means of a graphical interface 100 of the device 100, the first fixed CLID 13 and/or the second mobile CLID 14 as lines enabled to make or receive calls by means of the device 10;
A2) verifying that the operating system (OS) of the device 10 has not been tampered with or falsified;
A3) (optional) requesting to the user the geolocation data access permits of the device 10.

Where step A3) is optional in the enabling procedure, as it can also be carried out later, e.g., at the time of the call, or at any time by means of the device 10 system settings.

If the verification step A2) of verifying the integrity of the operating system has a negative result and/or if the geolocation data access permits requested in step A3) are denied at any time, the two CLIDs 13, 14 can not be enabled to make or receive calls.

As stated above, step A3) of requesting geolocation permits from the user is optional in the enabling procedure, which will be successfully completed as soon as the user grants such permits, for example at the time of the call.

The diagram in Figure 4 sets out the procedure for enabling 400 the fixed CLID 13: in particular, with reference to Figure 4, after the user activates the fixed CLID 13 thereof by means of the device 10, they send 401 the user credentials and *application token* (received in the authentication procedure, described in the previous section) to the Web Server 31, which queries 402 the OA&M DB 35 (the operator's *Operations Administration & Management* database), and provides verification 403 for the match between user's credentials and the fixed CLID 13, which is contractually assigned. This fixed CLID 13 is sent 404 to the device 10 through the Web Server 31, to verify that it matches the one used by the user.

If the match is verified, the enabling procedure 400 proceeds with step A2) of verifying the integrity and authenticity of the device 10, in particular of the OS of the operating system 10 (step A2).

This integrity verification operation is carried out by requesting an appropriate API, which queries 408 an API Server 33 of the manufacturer of the device, provided by the manufacturer of the device (see Figure 4).

It should be noted that where the manufacturer of the device 10 does not provide such a verification, it is impossible to guarantee that the operating system has not been tampered with, and therefore it is impossible to guarantee that the collected location information is correct.

If, following the *query* 408, the verification step A2) fails, the flow stops or, in a further embodiment, an appropriate policy is applied (e.g., a warning in the telephone records).

At last, in order to complete the enabling, the user is asked for the geolocation data access permits of the device 10 (step A3). The enabling procedure will be successfully completed as soon as the user grants such permits, simultaneously with the enabling procedure or subsequently, at the time of the call or at any time by means of device 10 system settings.

With reference to Figure 5 below, a possible embodiment of the enabling procedure will be described in detail in the specific case of the second mobile CLID 14, which, in an embodiment, can provide a further verification step of verifying the presence of the SIM 21 on the device 10.

Following the insertion of the SIM card 21, the device 10 comprises two main elements, the device 10 or the actual terminal (called ME, *Mobile Equipment*)*,* and the smart card called SIM (*Subscriber Identity Module*) 21 containing the user's personal data.

Each device 10 is uniquely recognized by the network by means of an IMEI (*International Mobile Equipment Identity*) code, directly incorporated in the hardware by the device 10 manufacturer.

Whereas the SIM contains the data needed to recognize the subscriber by the network. The SIM card 21 comprises the following information:
MSISDN (*Mobile Station International Subscriber Directory Number*): subscriber's telephone number. In fact, this is the mobile CLID 14 that the present procedure aims to enable.

IMSI (*International Mobile Subscriber Identity*): user identification code.

TMSI (*Temporary Mobile Station Identity*): temporary identification code.

LAI (*Location area identity*): code identifying the subscriber's position (location area).

It should be noted that the enabling of the second mobile CLID 14, associated with the mobile SIM card 21, takes place by activating the IMSI number of the relevant SIM card 21, by physically inserting the mobile SIM card 21 into the device 10, and by activating the MSISDN number (mobile CLID 14 of the relevant SIM card 21, inserted in the device 10, as will be better explained below.

In an embodiment, when the enabling procedure 400 is intended to enable, in particular, the second CLID 14 (in addition or alternatively to enabling the first CLID 13), such procedure can comprise an additional verification step A1.bis), following the selection step A1) by means of the graphical interface 100 of the second mobile CLID 14 as users enabled to make or receive calls: as shown in Figure 5, in such case, the method comprises step A1.bis) of verifying that the mobile SIM 21 carrying the second mobile CLID 14 is inserted in the device 10 enabled to carry out the method according to the invention.

If such verification step A1.bis) has a negative result, the second mobile CLID 14 is not enabled to make or receive calls, and the user will only be able to make calls with their first enabled CLID 13 (provided that it is enablable based on steps A1), A2) and, possibly, A3)).

With reference to Figure 5, such verification step A1.bis) of verifying the presence of the mobile SIM 21 on the enabled device 10 can be carried out in the ways described below.

Each operator has, in the area of operation or service area thereof, one or more HLR data bases 32 (*Home Location Register*) containing information relating to a part of the subscribed users thereof. In some versions of the mobile network, such element goes by the name of HSS (*Home Subscriber Server*)*.*

Upon signing the contract, each subscriber is registered in a single HLR 32.

The HLR 32 stores the user's permanent information, such as the data contained in the SIM (IMSI, MSISDN etc.), or dynamic data, such as the activated services and the identity of the MSC/VLR area (*Mobile Services Switching Center,* i.e. a switching center and the main part of the network subsystem, in this case represented by the VoIP server 12) where the user is temporarily located (displacement): basically, during the call handling, the VolP server 12 is able to identify the HLR 32 by the SIM MSISDN number 21 (relating to the mobile CLID 14), in which the subscriber is registered, and queries it by means of appropriate protocols.

In particular, with reference to Figure 5, after the user activates their own mobile CLID 14 by means of the device 10, they send 401 the user's credentials and the *application token* (received during the authentication procedure described in the previous section) to the Web Server 31. This queries 402 an OA&M database 35 (the operator's Operations Administration & Management database), which provides 403 verification of a match between the user's credentials and the mobile CLID 14 that is contractually assigned. This mobile CLID 14 is sent 404 to the device 10 through the Web Server 31 to verify whether it matches the one enabled by the user.

If it matches, the Web Server 31 queries 405 the HLR or HSS databases 32 to receive 406 an identification for the second mobile CLID 14, e.g., to receive 406 the IMEI and the IP address assigned, so as to verify the match between the IP of the current TCP session between the registered (authenticated, or enabled) device 10 and the Web Server 31 and the assigned IP address.

If the match is not verified, verification step A1.bis) gives a negative result, the flow stops and the user receives an error message on the device 10

It should be noted that the procedure provides that, during the enablement, the user uses the data connectivity of the SIM 21, whereby the possible error message shall recommend that the user completes this procedure in SIM data coverage.

Alternatively, if the match between IP of the current TCP session between the registered, and thus authenticated and enabled device 10 and the Web Server 31, and the assigned IP address is verified, the enabling procedure proceeds, and the Web Server 31 simultaneously implements the following operations:
- sending 407 the identification, e.g., the IMEI, received from the HLR or HSS database 32 to the device 10.
- verifying the integrity and authenticity of the device 10, in particular, of the OS of the operating system 10 (step A2).

As stated previously, the integrity verification operation is carried out by requesting a suitable API, which queries 408 the API Server 33 provided by the manufacturer of the device (the Figure 5).

If the verification fails, the flow stops or, in a further embodiment, an appropriate policy is applied (e.g., a warning in the telephone records).

If the verification is successful, the enabling procedure proceeds: IMEI is saved 409 in the device 10 for later use during the call handling procedure, which will be described later in the description.

Finally, the user is asked for device 10 geolocation data access permits (step A3). The enabling procedure will be successfully completed as soon as the user grants such permits, or simultaneously with the enabling procedure or subsequently, at the time of the call.

In a preferred embodiment, after completing the enabling procedure of the mobile CLID 14, the mobile SIM 21 can be removed from the device 10, or the device 10 can be set to airplane mode, and a user can nevertheless make and receive calls by means of the second CLID 14, associated with the data network.

In such case, it should nevertheless be noted that, if the mobile SIM 21 removed from the device 10 is inserted into a different mobile device 10', the second mobile CLID 14 is disabled by the device 10, and users are prevented from making calls from the device 10 by means of the application by the second CLID 14: in fact, the second mobile CLID 14 remains active, provided that the removed SIM 21 is not inserted into a different device 10'.

As will be better clarified with examples presented below, this event would cause the immediate de-registration of the device 10 from the operator's mobile network (200) (also referred to as the *IP Multimedia Subsystem* (IMS), or "Core IMS of the operator" and the user's logout from the application, preventing the user from placing or receiving calls by means of the device 10.

In an embodiment, this de-registration takes place by ensuring that, during a call, the device 10 sends to the VolP Server 12, in signaling (for both incoming and outgoing calls), the IMEI previously received during the enabling step of the second mobile CLID 14, as described above in the previous section. If the SIM 21 is inserted and used in another device 10', the IMEI associated with the SIM 21 (and therefore with the second mobile CLID 14 registered in the HLR 32) changes accordingly to reflect the IMEI of the last device 10' used with the SIM 21.

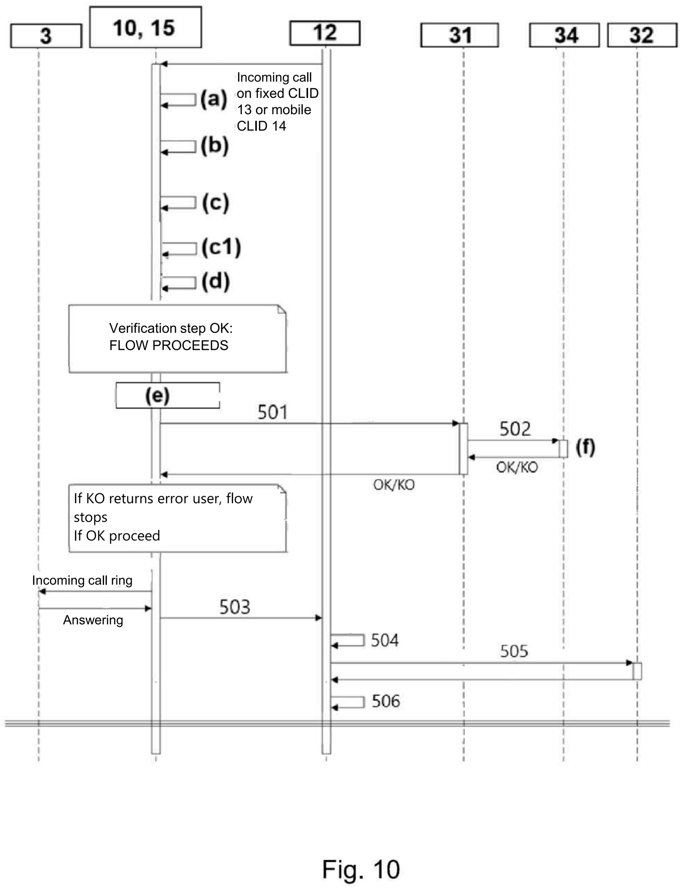

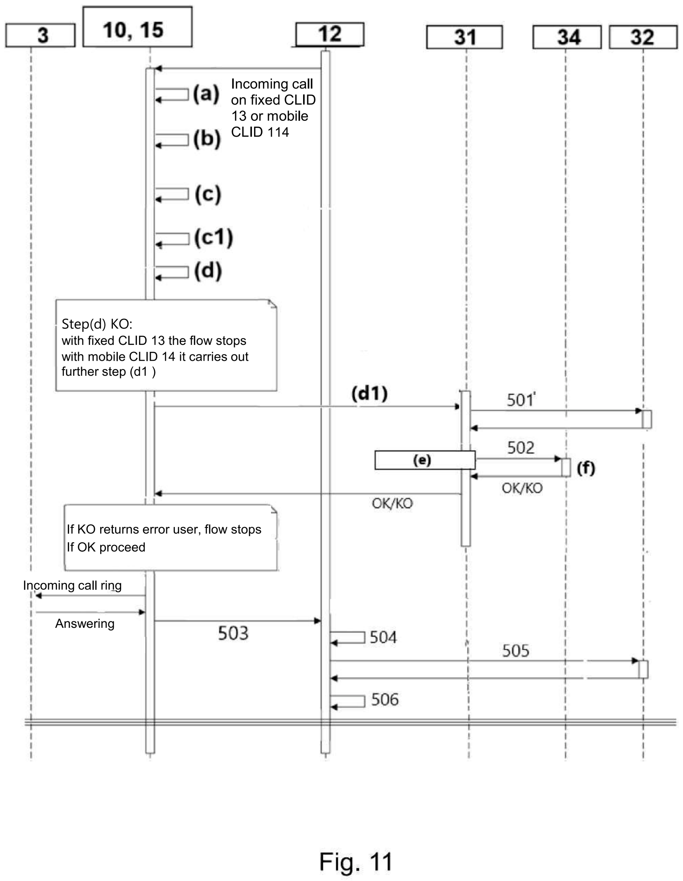

Consequently, (refer to Figure 10 or 11), when the VoIP Server 12 queries the HLR or HSS 32 databases during a call, to obtain the cell information, if the CLID/IMEI match has changed, the query will give a negative result and consequently, the VoIP Server 12 detects the discrepancy between the IMEI provided in the signaling by the device 10 and the one present in the HLR 32, blocking the outgoing or incoming call attempts, and disabling the second mobile CLID 14, requiring the user to implement a new enabling procedure.

The request can be issued, for example, simultaneously with an error message, which appears on the graphical interface 100 of the device 10.

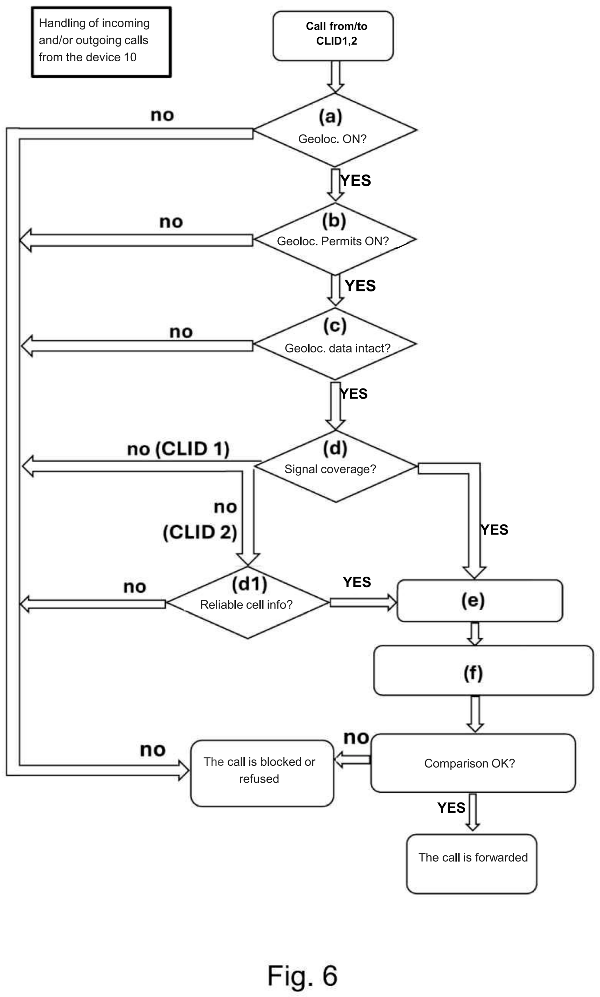

With reference to the accompanying Figures 6, and 8 - 11, the handling of incoming and outgoing calls of a mobile device 10 is described, in which both CLIDs 13, 14 are enabled to place and receive calls, preferably by means of the enabling procedure 400 described above in the previous section.

Following an attempt by a user 3 to make a call by means of the first fixed CLID 13 or the second mobile CLID 14 and/or upon receipt of a call by the first CLID 13 or the second CLID 14, the method comprises a number of verification steps, with particular reference to Figures 6, 8 and 9 for outgoing calls and to Figures 6, 10 and 11 for incoming calls:
the method for handling calls according to the invention provides a number of verification steps, both for outgoing calls and for incoming calls:
   a) verifying that the geolocation function is active on the mobile device 10;
   b) verifying that the geolocation data access permits are active on the mobile device 10;
   c) verifying that the data relative to the geolocation of the mobile device 10 has not been tampered with or falsified;
in which, if at least one of the three verification steps a), b) or c) has a negative result, the incoming or outgoing call is blocked.

In other preferred embodiments of the object of the present description, instead of simply blocking the call, a determined action can be forced, which is selected, for example, during the application procedure that can be provided according to a determined company policy or regulation. Thus, it is possible to choose to block the call, refuse it with a notification message, divert it to another number, record a log of the event, initialize a further analysis of the call, etc.

In an embodiment, the geolocation functions of the device 10 are carried out by virtue of the presence of a geolocation module 15.

In an embodiment, the verification steps also comprise a further optional step c1) of verifying that the operating system (OS) of the device 10 is intact and original and it has not been tampered with or falsified.

Optionally, such further verification step c1) can be carried out only upon the first launch of the application and/or upon each launch of the application.

The embodiment in which such further verification step c1) of verifying the integrity of the operating system is carried out at each call and is only requested and necessary in contexts where (due to existing regulations or criticalities) such level of caution is required.

The method further comprises the following further verification step:
d) verifying that the geolocation module 15 is in a signal coverage zone for the purposes of locating the device 10

In particular, it is verified whether the geolocation module 15 is in GPS, Wi-Fi, GSM signal coverage, or other technology needed to locate the device 10.

With reference to Figures 6 or 8 - 11, in a preferred embodiment, if one of the controls fails and therefore at least one of the three verification steps a), b), c) has a negative result, the user 3 sees a specific error message on the device 10.

If, following step d) of verifying the signal coverage, the geolocation module 15 is found to be in conditions of poor coverage, the location information can not be considered reliable, and incoming or outgoing calls are not forwarded, and they are consequently blocked or subjected to other verification steps or constraints based on a given corporate or regulatory policy.

It is therefore possible to force blocking the call or refuse it with a notification message, divert it to another number, record a log of the event, initialize further analysis of the call, etc.

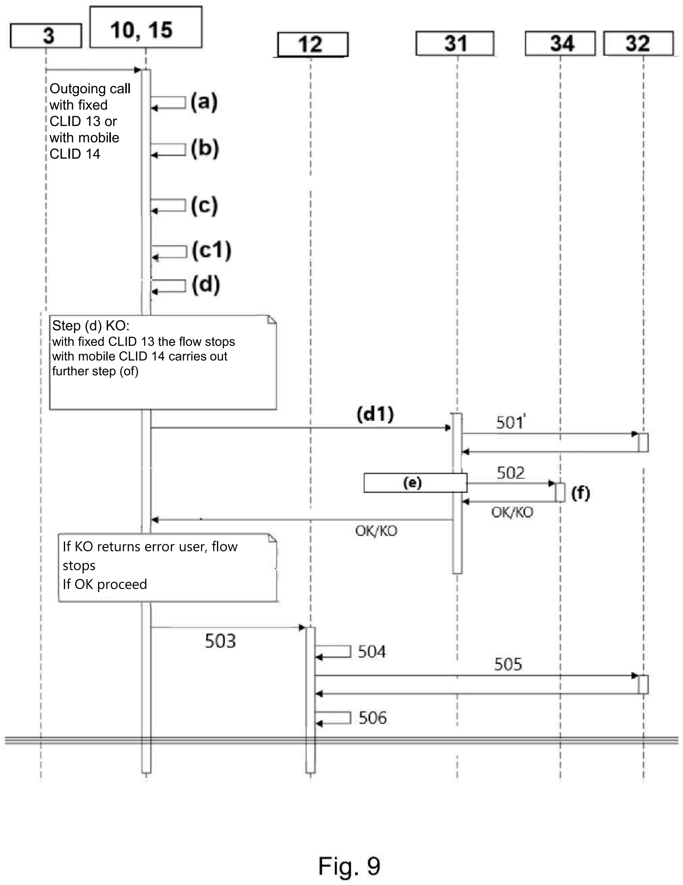

In particular, in a preferred embodiment, if the call comprises the use of the first fixed CLID 13 and the verification step d) of signal coverage fails, the call is then blocked or refused, while if it comprises the use of the second mobile CLID 14, then the call can be further analyzed with a further verification step d1) of verifying the validity of the telephone cell information, which will be described hereinafter with reference to the embodiment shown in the accompanying Figures 9 and 11, showing the case where the call - outgoing (Figure 9) or incoming (Figure 11), respectively - comprises the use of the second mobile CLID 14.

In fact, in the event of a mobile CLID 14 and in the event of failure of the verification step d), the method, optionally, comprises the further step:
d1) verifying the validity of the telephone cell information;

This step provides that the device 10 requests information from the operator's Web Server 31 about the validity of the telephone cell (or antenna) information, i.e. the validity of the information about the location of the device 10 with reference to the positioning of the telephone cell (or telephone cells) where the last device 10 connection is recorded by the telephone operator.

In turn, the Web Server 31, using the IMEI code (*International Mobile Equipment Identity*) - or another device 10 identification code, received during CLID 14 enabling step (see description of enabling procedure 400 of mobile CLID 14 described in one of the previous sections of this description), requests 507 from the HLR database 32 (*Home Location Register*) or from the HSS database (*Home Subscriber Server*) in the *service area* of the operator the cell and age information relating to the SIM 21. The HLR database 32 returns such information 507'.

If the age value of the cell information is less than a threshold time T-age, the cell information is deemed valid, and the Web Server 31 recognizes the tracking information as reliable and the flow can proceed.

If, following the step d1) of verifying the validity of the cell information, the Web Server 31 gives a negative response and thus the cell information is not reliable for locating the device 10 or, in the case where the VolP service is unusable in the zone covered by the cell, the incoming or outgoing call is blocked or subjected to other constraints based on a determined corporate or regulatory policy.

In an embodiment, at least step c) of verifying that the data relating to the device 10 geolocation has not been falsified, is carried out in a continuous manner, also during the call, preferably at predetermined and configurable time intervals.

In an embodiment of the method according to the invention, all the aforesaid verification steps a), b) c), d) and possibly c1) and d1) are carried out in a continuous manner, also after starting the call made or received by means of the first CLID or the second CLID 13, 14, and, in particular, they are carried out in a continuous manner during the call, preferably at predetermined and configurable time intervals.

In an embodiment, the time intervals can be configured and set depending on each case, for example to comply with the existing regulations in a particular geographical area, or a particular rate set by a certain operator.

The time intervals are generally in the order of a few minutes.

Both in the case of the first fixed CLID 13 and in the case of the second mobile CLID 14, if all the verification steps a), b), c), d) and possibly c1) and d1) have a positive result, the method proceeds according to the following further steps:
e) determining the real-time geographical position of the device 10;
f) comparing the geographical position of the device 10 detected in real time with a geofencing database 34, containing information relating to predetermined geographical areas, in which the first CLID and/or the second CLID are usable.

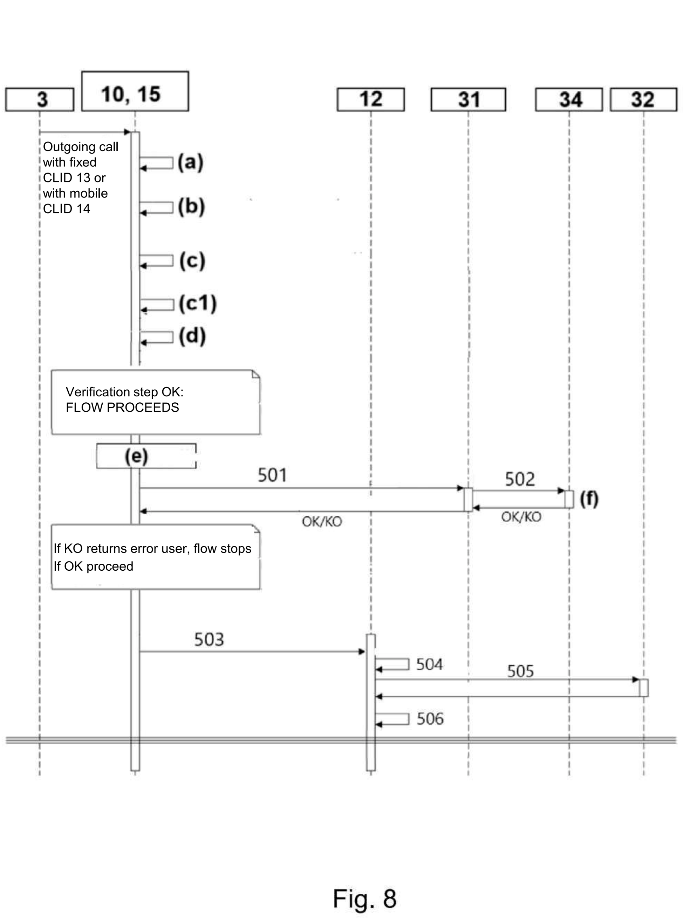

With reference to Figures 8 - 11, following step (e), the detected geographical position is sent 501 by the Web Server 31 to the geofencing database 34 to carry out the comparison step f).

If, following the comparison step f), the geographical position of the device 10 is incompatible with the geographical areas stored in the geofencing database 34 as compatible with the CLID used, the incoming or outgoing call is blocked or subjected to other constraints based on a given corporate or regulatory policy.

Vice versa, if the verification step f) has a positive result, the call can be duly completed.

Remember that geofencing is one of the technologies on which *Location Based Systems* (LBS) are based, and consists of creating virtual barriers (fences) around geographical areas and the use thereof to implement action when a user enters or exits said boundaries.

These virtual barriers or fences can be of various types and sizes: for example, they can be as large as a store, a small office, a building, a large company or a neighborhood, up to entire cities or even countries. The types vary from virtual barriers of the static type, which refer to fixed geographical locations, such as offices, restaurants, stores and monuments, to virtual barriers of the dynamic type, referring to entities that can change position over time. Some examples of the last type include geofences associated with vehicles or moving individuals.

With reference to Figures 8 - 11, step f) of verifying compliance with limited and predefined areas described above is configured to control incoming and outgoing calls so as to ensure that mobile or nomadic VolP telephony services are not provided in the zones that are not permitted by existing regulations or company policy.

In a possible embodiment, the device 10 is configured to contact the telephone operator's Web Server 31 to query the geofencing database 34.

In a further preferred embodiment, the geofencing database 34 is loaded onto the device 10 in the initialization phase and step f) of querying the geofencing database 34 is carried out directly inside the device 10, without needing to contact the Web Server 31.

Therefore, step f) can be carried out by the device 10 inside the device 10, using the Web Server 31, which queries a geofencing database 34, or without using the Web Server 31 in the case of a geofencing database 34 loaded on the device 10 during the provisioning step.

The procedure for handling incoming or outgoing calls will be described in detail below, with reference to the accompanying Figures 8 - 11, and in particular, further details of steps e) and f) will be provided, in particular, in the various conditions of presence or absence of network coverage for the cases of using a fixed CLID 13 or a mobile CLID 14.

If the device 10 is in a zone with signal coverage (i.e., if step (d) of verifying signal coverage gives a positive result), the method proceeds in the same way both in the case of using the first fixed CLID 13 and in the case of using the mobile CLID 14, and step (e) of determining real-time geographical position of the device 10 is carried out with the geolocation function and, in particular, with the geolocation module 15 of the device 10.

With reference to Figures 8 (outgoing call) and Figure 10 (incoming call)), if the step (d) of verifying signal coverage gives a positive result, the method proceeds with determining the geographical position (step (e)) by the geolocation module 15.

Following step (e), the geographical position detected by the geolocation module 15 is sent 501 to the Web Server 31, and from the Web Server 31 it is sent 502 to the geofencing database 34 to carry out the operation of comparison in step f).

If the result of the step f) of comparison with the geofencing database 34 is positive (OK), the signal of the outgoing call (Figure 8) or incoming call (Figure 10) is forwarded 503 by the device 10 to the VolP server 12.

In a preferred embodiment, forwarding the call signal is carried out 503 by means of a SIP INVITE request containing suitable headers for carrying the location information of the device 10, as shown in Figures 8 and 10. In response, upon receipt of the SIP request, the VoIP Server 12 extracts the location information and stores it in the telephone records 504.

Subsequently, the VolP server 12 requests 505 further telephone cell information, by means of a query from the HLR or HSS database 32 and, after receiving it, it stores 506 this information with the previous information stored in the telephone records 504.

If the device 10 is in a zone where the signal coverage is absent (i.e., if the signal coverage step (d) gives a negative result), the method proceeds as follows:
in the case of using the first fixed CLID 13, with reference to Figure 9 (outgoing call) and Figure 11 (incoming call)), if the signal coverage is absent, the call is blocked and step (e) of determining the real-time geographical position of the device can not be carried out.

Conversely, in the case of using the second mobile CLID 14 (Figure 9 (outgoing call) and 11 (incoming call)), if the geolocation device 15 is not in a zone with signal coverage and therefore the step (d) of verifying the signal coverage gives a negative result, the method verifies the reliability of the cell information (step (d1)) and, if it is deemed reliable, the geolocation function can nonetheless be implemented by virtue of such cell information, as previously said, and step (e) of determining the real-time geographical position of the device is carried out by virtue of tracking via the telephone cell signal: in this case step (e) of determining the real-time geographical position of the device 10 is carried out by the Web Server 31, which detects the telephone cell information.

If the second mobile CLID 14 is used to locate the device 10 in the absence of signal coverage, it is possible to use the technique of triangulating the telephone cells connected by the device 10, based on the signals received from different mobile network cells. This methodology uses the principle that a device 10, such as a smartphone, a tablet, etc., always connects to the nearest cell or to the one with the strongest signal available, however, it is often able to communicate with more than one cell at a time.

Triangulation is based on measuring the distances between the device 10 and at least three different telephone cells. Each cell covers a defined geographical area and, by knowing the distance between the device 10 and each of the cells, it is possible to calculate the position of the device 10 with a certain accuracy.

The triangulation accuracy of the telephone cells depends on several factors. In dense urban areas, where the cells are numerous and closely spaced, the technique can provide a position with an accuracy of a few meters. In rural areas, where the cells are spaced apart from one another, the accuracy can be significantly reduced, reaching hundreds of meters.

Following step (e), the geographical position detected by the Web Server 31, by virtue of the cell information, is sent 501' to the HLR or HSS database 32, and it is sent 502 to the geofencing database 34 to carry out the comparison step f).

If the result of the step f) of comparison with the geofencing database 34 is positive (OK), the signal of the outgoing call (Figure 9) or incoming call (Figure 11) is forwarded 503 from the device 10 to the VolP server 12.

In a preferred embodiment, the forwarding of the call signal is carried out 503 by means of a SIP INVITE request containing suitable headers for carrying the location information of the device 10, as shown in Figures 9 and 11. In response, upon receipt of the SIP request, the VoIP Server 12 extracts the location information and stores it in the telephone records 504.

Subsequently, the VolP server 12 requests 505 further cell information, by means of a query, from the HLR or HSS database 32, and after receiving it, it stores 506 this information with the previous information stored in the telephone records 504. In fact, it should be noted that, in the absence of coverage, the aforesaid step d1) is used to verify the cell information, and the call signaling message made 503 by means of the SIP INVITE request does not contain the geolocation coordinates. Such information will nonetheless be retrieved by the VolP Server 12, which requests 505 further cell information, by means of the aforesaid query, from the HLR or HSS database 32 and, after receiving it, it stores 506 this information with the information previously stored in the telephone records 504.

The need to receive reliable and usable information for determining the location of the user and device 10, so as to verify that the user stays within predetermined and permitted geographical zones, continues also during the call.

In this regard, as stated above, in an embodiment, at least said step c) of verifying that the data relating to the geolocation of the device 10 has not been falsified is also carried out in a continuous manner during the call, preferably at predetermined and configurable time intervals.

In an embodiment of the method according to the invention, all the aforesaid verification steps a) - d) and possibly d1) are carried out in a continuous manner, also after initiating the call placed or received by the first CLID 13 or second CLID 14 and in particular, they are carried out in a continuous manner during the call, preferably at predetermined and configurable time intervals.

In an embodiment, the time intervals can be configured and set depending on each case, for example to comply with the existing regulations in a particular geographical area, or a particular rate set by a certain operator.

The time intervals are generally in the order of a few minutes.

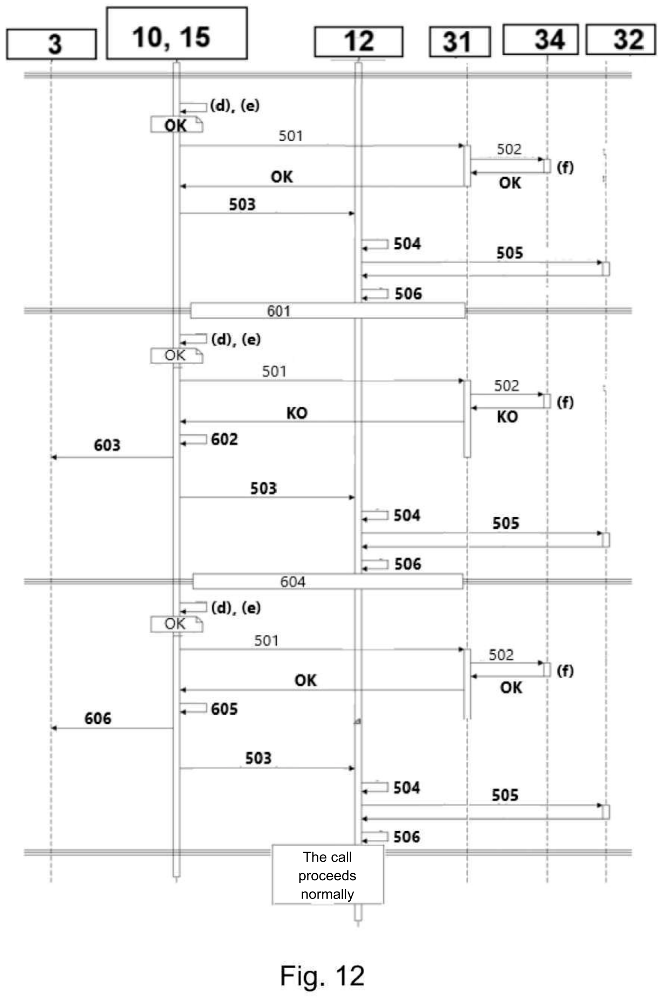

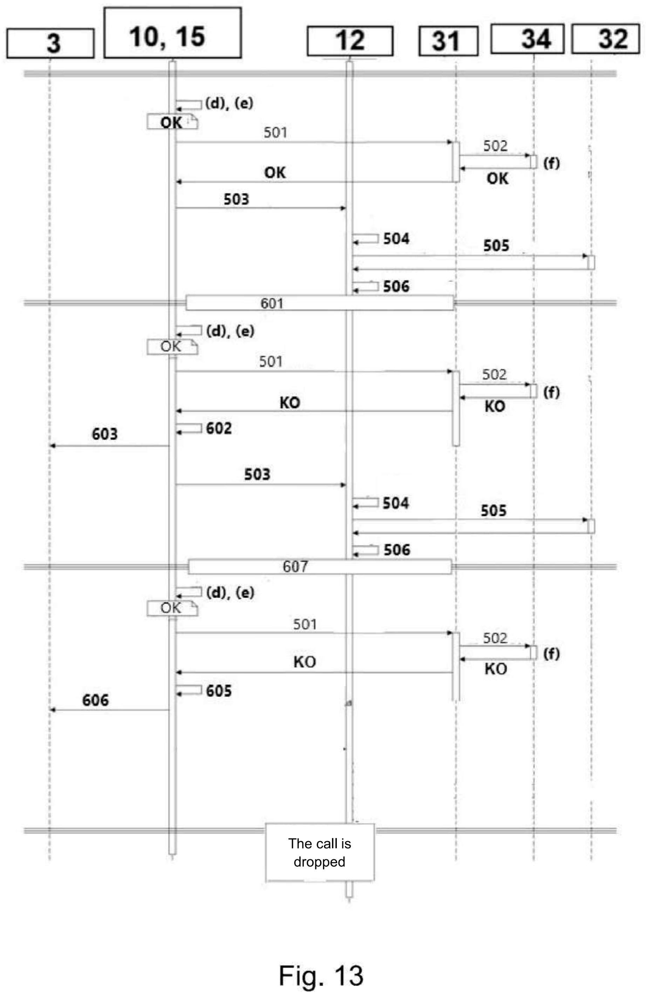

With reference to Figures 12, 13, in a preferred embodiment, if one of the checks fails and therefore at least one of the three steps a) - d) and possibly d1) has a negative result, the ongoing call is interrupted, sending an appropriate dropped-call signaling message to the VoIP Server 12 and the user sees on the device 10 a specific error message and possibly instructions on how to restore the connection. In an embodiment of the method according to the invention, with particular reference to Figures 12 and 13, step d) of verifying signal coverage, step e) of determining the real-time geographical position, and step f) of comparing the detected geographical position with the geofencing database 34 are carried out in a continuous manner, also after starting the call made or received by the first or second CLIDs 13, 14 and, in particular, they are carried out in a continuous manner during the call, preferably at predetermined and configurable time intervals.

The time intervals are preferably in the order of few minutes.

In particular, with reference to Figures 12 and 13, if step d) of verifying the signal coverage has a negative result (for example, because the user has moved to a zone of poor coverage of the location service 601) and/or if, following the comparison step f), the geographical position of the device 10 is incompatible with the geographical areas stored in the geofencing 34 database as compatible with the CLID used, the method comprises starting a timer 602 relating to a grace period within which the call will be dropped if the user does not re-enter a zone permitted for the CLID used. Such an embodiment is shown in the attached Figures 12 and 13.

Optionally, at the start of this timer, the device 10 provides 603 the user with an indication, in the form of a notification on the device 10, or audio message, or SMS, or other.

If, within the aforesaid grace period, the user re-enters 604 a permitted zone, with signal coverage (Figure 12) within the deactivation time of the timer 605, a notification 606 can optionally be sent to the user to notify that they have re-entered the permitted zone.

If, within the aforesaid grace period, the user does not re-enter 607 a permitted zone, with signal coverage, (Figure 13) and therefore all further attempts of verification step d) and/or comparison step f) with the geofencing database 34 carried out in a timed manner fail, the method imposes appropriate intervention policies, such as the dropping of the ongoing call, for example, or the signaling thereof in the records, or any other policy required by existing regulations. Also in this case, the user can be informed through the device 10 interface.

Figure 12 shows the case in which the user moves from a permitted zone to a non-permitted zone and re-enters a permitted zone within the predefined grace period. Figure 13 shows the case in which the user moves from a permitted zone to a non-permitted zone and does not re-enter a permitted zone within the predefined grace period.

Figures 12 and 13 describe the case in which step f) of comparing with the geofencing database 34 fails, but the action is identical to that in which step d) of verifying the signal coverage fails or, if optionally provided, step d1) of verifying the cell information.

In fact, in the embodiment in which the call comprises the use of the second mobile CLID 14, if, following step d) of verifying signal coverage, the geolocation module 11 is in conditions of poor coverage and therefore the location information can not be considered reliable, as described above, the method optionally comprises carrying out the aforesaid step d1) of verifying the validity of the cell information.

As with the use of fixed CLID 13, if the user is in a permitted zone with coverage within the "Grace Period" or step d1) gives a positive result, then the system returns to a normal operating mode. Optionally and where applicable, the system sends a notification of re-entry into a permitted zone by any suitable notification means.

In a possible embodiment, the method provides a further verification step of detecting a VPN network. It is a further guarantee if the existing legislation also requires tracking the IP address for the purposes of locating the user. In order to run this check, the method will use the specific APIs of the operating system used by the device 10. In particular, the system will check not only the presence of active VPN software, but also that the app traffic is actually routed through the VPN.

In the event of a positive result, i.e., VPN installed, active and telephone traffic of the application forwarded on the VPN with active CLIDs 13 or 14, the incoming or outgoing call is blocked.

In a possible embodiment, a further device 10", e.g., a PC or tablet, is used for carrying out fixed-mobile convergence (FMC), i.e., the use of CLID 13 and/or CLID 14 on the app installed on a PC or tablet.

In such a case, the method also provides a step of verifying the geographical position of the device 10 and of the further device 10" for verifying that the further device 10" is in the vicinity of said device 10. In order to carry out this verification, the method comprises establishing a communication channel between the application on the device 10 and the application on the device 10".

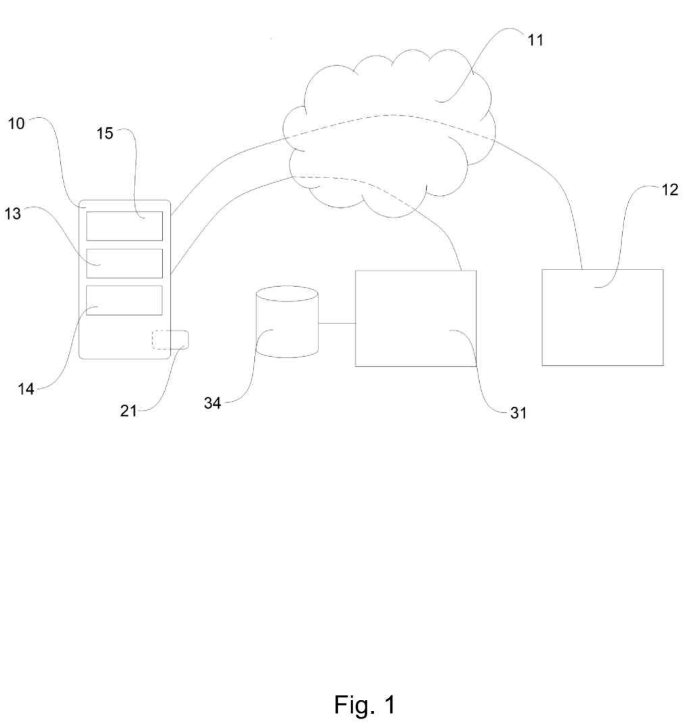

With reference to Figure 1, the present invention is further directed to a system for handling nomadic incoming or outgoing calls of a device 10, made via VolP technology, according to the method described above.

A system according to the invention comprises
- a communication device, e.g., a mobile communication device 10 associated with at least a first CLID 13 relating to a fixed geographical prefix exploiting a data network, and associable with at least a second mobile CLID 14 by means of a mobile SIM card 21, inserted in said device 10 and connected to a telephone network,
- at least one geolocation module 15 for determining the position of said device 10 in real time,
- a VoIP server 12 for receiving, as input, call requests to or from the device 10 and the data relative to the real-time geographical position of the device 10 and to the CLID 13, 14 in use,
- verification means configured to compare the geographical position of the device 10 detected in real time with the geofencing database, containing information relating to predetermined geographical areas where the first CLID and/or second CLID are usable,
in which the device (10) is provided with a program, loaded on a memory support, which carries out the steps of the method described above.

In a possible embodiment, the system comprises a further device 10" configured to carry out the fixed-mobile convergence FMC with the device 10.

## Claims

1. A method for handling mobile or nomadic incoming or outgoing calls of a device (10), made with Voice over IP, VolP technology, where said device (10) is a mobile device provided with a geolocation module (15), and associated with at least a first Caller Line Identifier, CLID, (13) relating to a fixed network prefix exploiting a data network and/or at least a second mobile CLID (14) by means of a mobile SIM card (21), inserted in said device (10), exploiting a mobile telephone network,
and wherein, following an attempt by a user (3) to make a call using said first or second CLID (13, 14) and/or upon receipt of a call on said first or second CLID (13, 14), said method provides the following verification steps:
a) Verifying that the geolocation function is active on said device (10);
b) Verifying that the geolocation data access permits are active on said device (10);
c) Verifying that the data relating to the geolocation of said device (10) have not been tampered with or falsified;
d) Verifying that the geolocation module (15) has signal coverage
wherein, if at least one of the verification steps (a), (b), (c) or (d) produces a negative result, the incoming or outgoing call is not forwarded,
and wherein if all the verification steps a), b), c) and d) have a positive result, said method comprises the following further steps:
e) Determining the geographical position of said device (10) in real time;
f) Comparing the geographical position of said device (10) detected in real time with a geofencing database (34), containing predetermined geographical areas in which said first and/or second CLIDs (13, 14) are usable;
wherein, if, following said comparison step f), the geographical location of said device (10) is incompatible with the geographical areas stored in the geofencing database (34) as compatible with said first or second CLID (13, 14) used, the incoming or outgoing call is blocked or refused.

2. A method according to claim 1, wherein if the call attempt is made to or from said second mobile CLID (14), and if said step d) of verifying that the geolocation module (15) has signal coverage gives a negative result, the verification steps comprise a further step d1) of verifying the validity of the original telephone cell information,
wherein if said step d1) produces a negative result, the incoming or outgoing call is blocked,
and wherein if said verification step d1) produces a positive result, the method proceeds with said steps e) and f).

3. A method according to claim 1 or 2, wherein at least said verification step c) is carried out in a continuous manner, also during the call, preferably at predetermined and configurable time intervals.

4. A method according to any one of the preceding claims, wherein said step of determining the real-time geographical position e) and/or said step of comparing the geographical position detected with the geofencing database f) are carried out in a continuous manner, also during the call, preferably at predetermined, configurable time intervals.

5. A method according to one of the preceding claims, which comprises an enabling procedure (400) for said first fixed CLID (13) and/or said second mobile CLID (14) to allow a user (3) to make and receive calls, alternatively, by means of said first or second CLID (13, 14).

6. A method according to claim 5, wherein said enabling procedure for said first fixed CLID (13) and/or said second CLID (14) comprises the following step:
A1) Selecting, by means of a graphical interface (100) of said device, said first fixed CLID (13) and/or said second mobile CLID (14) as users enabled to perform or receive calls by means of the device (10).
A2) Verifying that the operating system of the device 10 has not been tampered with or falsified.
wherein, if the verification step A2) produces a negative result, said first fixed CLID (13) and/or said second mobile CLID (14) is not enabled to make or receive calls.

7. A method according to one of claims 5 or 6, wherein following the selection by means of the graphical interface (100) of the second mobile CLID (14) as users enabled to make or receive calls by means of the device (10), said enabling procedure (400) comprises an additional step A1.bis) of verifying that said mobile SIM (21) carrying said second mobile CLID (14) is present on said device (10), wherein, if said verification step A1.bis) produces a negative result, said second mobile CLID (14) is not enabled to make or receive calls.

8. A method according to one of claims 5 - 7, wherein following completion of said enabling procedure (400) for said first fixed CLID (13) and said second mobile CLID (14), a user (3) may alternatively make calls by means of said first CLID (13) or by means of said second CLID (14), by selecting the choice on each start of a call through said user interface (100) on said device (10).

9. A method according to one of the preceding claims, wherein if said mobile SIM (21) is removed from the first device (10) and is inserted into a different mobile device (10'), said second CLID (14) is disabled from said device (10), and a user (3) can not make calls by means of said second mobile CLID (14).

10. A system for handling mobile or nomadic incoming or outgoing calls from a communication device (10), made with Voice over IP (VoIP) technology comprising:
- a communication device (10), associated with at least one first CLID (13) relating to a fixed geographical prefix, and associable with at least a second mobile CLID (14) by means of a mobile SIM card (21) connected to a telephone network,
- at least one geolocation module (15) for determining the position of said device (10),
- a geofencing database (34) containing information relating to predetermined geographical areas, in which said first fixed CLID (13) and/or said second mobile CLID (14) are usable;
- a VolP server (12) to receive input call requests from or to said device (10) and data relating to the real-time geographical position of the device (10) and to the CLID (13, 14) in use,
- verifying means for comparing the geographical position of said device (10) detected in real time with said geofencing database (34), containing predetermined geographical areas, in which said first fixed CLID (13) and/or said second mobile CLID (14) are usable, wherein the device (10) is provided with a program, loaded onto a memory support, implementing the steps described in one or more of claims from 1 to 9.
